# EUROPEAN PATENT APPLICATION

(11) **EP 4 691 671 A1**
(43) Date of publication of application: **11.02.2026**
(21) Application number: 24780458.6
(22) Date of filing: 27.03.2024
(51) Int. Cl.: B23B 27/00, B23Q 17/09, B23Q 17/22

(54) **CUTTING TOOL UNIT**

(30) Priority: 31.03.2023 JP 2023058016
(71) Applicant: Mitsubishi Materials Corporation, Tokyo 100-8117 (JP)
(72) Inventor: KAMIJYO Hiroki, Saitama-shi, Saitama 330-8508 (JP); TAKAHASHI Wataru, Tokyo 100-8117 (JP); ABE Taro, Tokyo 100-8117 (JP)
(74) Representative: Hoffmann Eitle
(86) International application number: PCT/JP2024/012264
(87) International publication number: WO 2024/204356

(57) **Abstract**

A cutting tool unit includes a cutting tool, and a tool accessory attached to the cutting tool. The cutting tool includes a tool main body extending along a tool axis and having a pedestal at a front portion on one side in an axial direction along the tool axis, a cutting insert detachably attached to the pedestal, a sensor provided in the tool main body and configured to measure a physical quantity, an AD converter configured to convert an analog electrical signal measured by the sensor into a digital electrical signal. The tool accessory includes an accessory main body, and a control board provided in the accessory main body and connected to the AD converter via a connection wire.

## Description

### TECHNICAL FIELD

The present invention relates to a cutting tool unit.

Priority is claimed on Japanese Patent Application No. 2023-058016, filed on March 31, 2023, the content of which is incorporated herein by reference.

### BACKGROUND ART

In a machine tool such as a lathe or a machining center, an electronic component such as a sensor may be provided in a cutting tool to confirm a state of a cutting edge of the cutting tool. Patent Document 1 discloses a configuration including a main body portion on which a cutting chip is installed, a sensor disposed in the main body portion, a circuit board disposed in the main body portion and electrically connected to the sensor, and a battery disposed inside the main body portion.

### Citation List

### Patent Document

Patent Document 1: Japanese Patent No. 7120478

### SUMMARY OF INVENTION

### Technical Problem

In the above-described configuration, when a heat generating element is mounted on a circuit board disposed in the main body portion, heat generated by the element is transmitted to the main body portion via the circuit board. As a result, there is a possibility that the measurement sensitivity of the sensor is affected. In addition, the main body portion or the cutting edge may thermally expand, thereby causing a possibility that the machining accuracy is affected.

In view of the above-described circumstances, the object of the present invention is to provide a cutting tool unit that can suppress a thermal influence from a control board and can ensure measurement sensitivity of a sensor and machining accuracy.

### Solution to Problem

According to one aspect of a cutting tool unit according to the present invention, the cutting tool unit includes a cutting tool, and a tool accessory attached to the cutting tool. The cutting tool includes a tool main body extending along a tool axis and having a pedestal at a front portion on one side in an axial direction along the tool axis, a cutting insert detachably attached to the pedestal, a sensor provided in the tool main body and configured to measure a physical quantity, an AD converter configured to convert an analog electrical signal measured by the sensor into a digital electrical signal. The tool accessory includes an accessory main body, and a control board provided in the accessory main body and connected to the AD converter via a connection wire.

According to the one aspect of the cutting tool unit of the present invention, the control board is provided in the accessory main body of the tool accessory attached to the cutting tool. **In** this manner, even when an element provided in the control board generates heat, it is possible to suppress a possibility that the heat is transmitted to the cutting tool. Therefore, it is possible to suppress a possibility that measurement sensitivity of the sensor is affected, and a possibility that the tool main body or the cutting insert thermally expand. As a result, it is possible to suppress a thermal influence from the control board, and it is possible to ensure the measurement sensitivity of the sensor and machining accuracy.

In addition, the AD converter is provided in the cutting tool, and the AD converter and the control board are connected to each other via the connection wire. In this manner, the digital electrical signal converted by the AD converter is transmitted to the control signal via the connection wire. An analog signal that is easily affected by noise from outside is transmitted only in a short path from the sensor to the AD converter provided in the cutting tool. Therefore, the influence of noise can be suppressed, and the physical quantity can be measured with high sensitivity by the sensor.

In the cutting tool unit, the control board may further include a control module configured to output a control signal for controlling an operation of the sensor to the sensor via the connection wire.

In this case, the control board includes the control module configured to control an operation of the sensor. In this manner, the cutting tool unit itself can control the operation of the sensor. Therefore, there is no need to provide a program or the like for controlling the operation of the sensor on the machine tool side. As a result, there is no need to set a program or the like corresponding to the cutting tool to be used in advance on the machine tool side in advance before machining using the cutting tool is performed, reducing setup effort and time.

In the cutting tool unit, the control board may further include a wireless communication module configured to transmit a measurement signal of the sensor to an outside, based on the digital electrical signal input from the AD converter via the connection wire.

In this case, the wireless communication module is provided in the accessory main body of the tool accessory attached to the cutting tool. In this manner, it is possible to suppress a possibility that wireless communication is adversely affected by the metal forming the cutting tool.

In the cutting tool unit, the tool accessory may further include a battery configured to supply power to the control board and the sensor.

In this case, since the tool accessory includes the battery, the power can be supplied to the control board and the sensor without receiving power supply from the outside. Therefore, a power supply wire for receiving the power supply from the outside is not required.

In the cutting tool unit, the control board may include a heat generating element.

In this case, it is possible to suppress a possibility that heat generated by the control board including the heat generating element is transmitted to the cutting tool.

In the cutting tool unit, the AD converter may be accommodated in an accommodation hole provided inside the cutting tool made of metal.

In this case, since the AD converter is accommodated in the accommodation hole inside the metal-made cutting tool, influence of noise on the analog signal output from the sensor can be more effectively suppressed.

In the cutting tool unit, the tool accessory may be a holder holding the cutting tool and mounted on a machine tool.

In this case, since the control board is provided in the holder holding the cutting tool, it is possible to suppress thermal influence from the control board, and it is possible to ensure measurement sensitivity of the sensor and machining accuracy. Advantageous Effects of Invention

According to one aspect of the present invention, a cutting tool unit can suppress thermal influence from a control board, and ensure measurement sensitivity of a sensor and machining accuracy.

### BRIEF DESCRIPTION OF DRAWINGS

[FIG. 1] A perspective view of a turning tool unit (cutting tool unit) according to an embodiment of the present invention.
[FIG. 2] A perspective view of a head portion of the turning tool (cutting tool) according to the embodiment of the present invention.
[FIG. 3] A side cross-sectional view of the turning tool (cutting tool) according to the embodiment of the present invention.
[FIG. 4] A view showing a control board provided in the turning tool (cutting tool) according to the embodiment of the present invention, and a cross-sectional view taken along line I-I in FIG. 3.
[FIG. 5] A side view of a turning tool unit (cutting tool unit) in a modification example of the embodiment of the present invention.
[FIG. 6] A perspective view of a turning tool unit (cutting tool unit) in another modification example of the embodiment of the present invention.

### DESCRIPTION OF EMBODIMENTS

Hereinafter, a turning tool 1 according to an embodiment of the present invention will be described with reference to the drawings. **In** the following drawings, in order to facilitate understanding of each configuration, a scale and the number of respective structures may be different from those of an actual structure.

### <Turning Tool Unit>

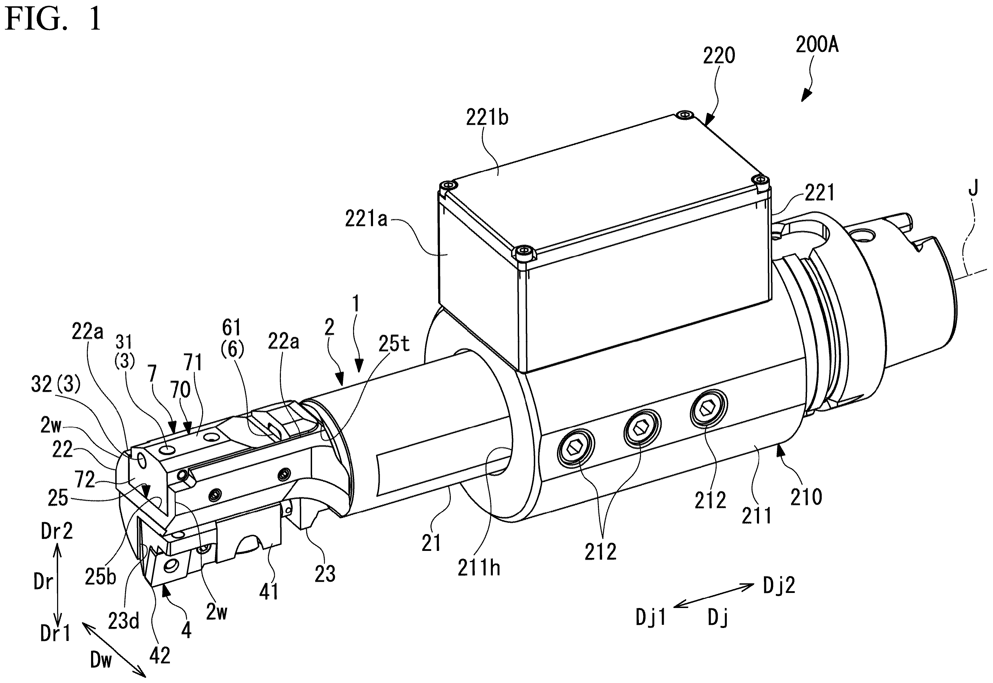

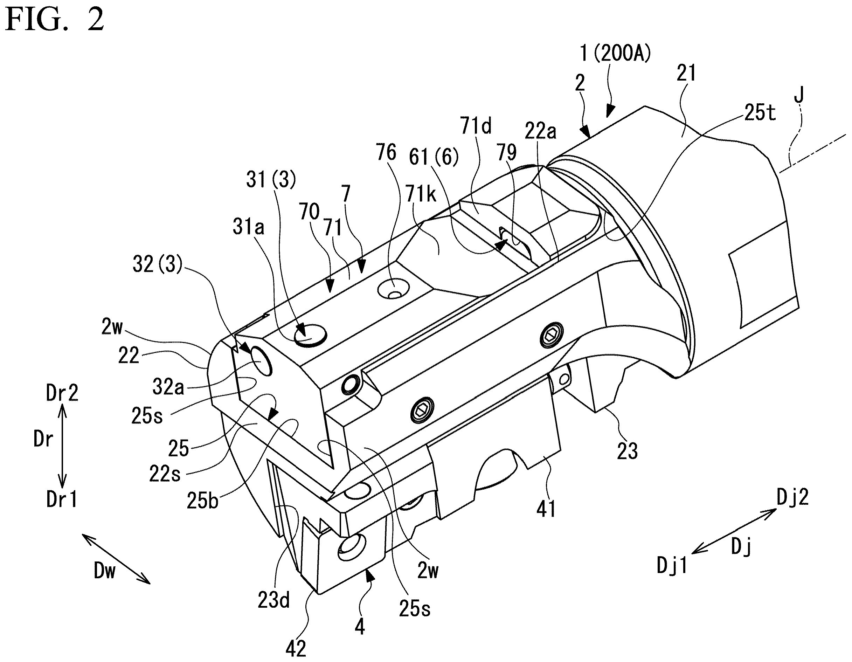

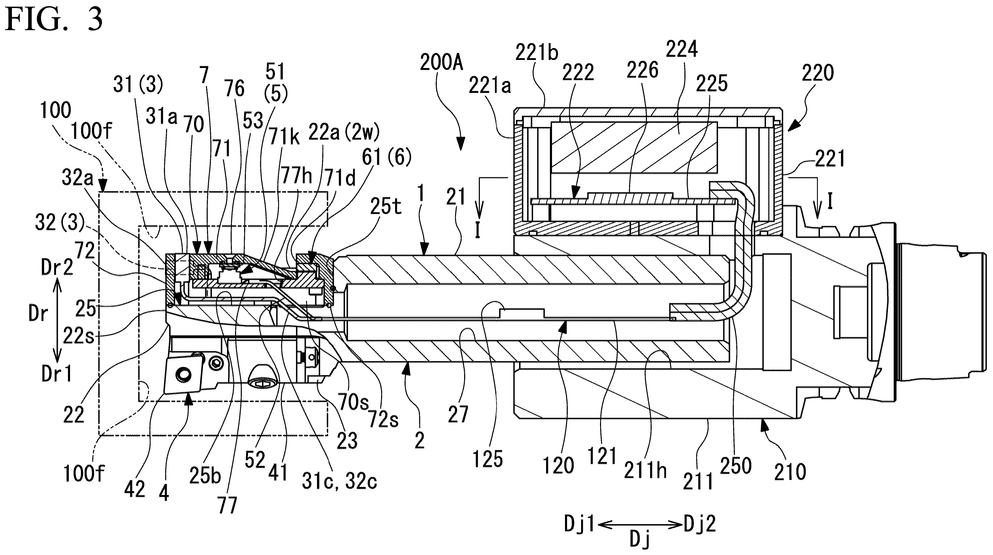

FIG. 1 is a perspective view of a turning tool unit (cutting tool unit) 200A according to the embodiment of the present invention. FIG. 2 is a perspective view of a head portion 22 of a turning tool (cutting tool) 1. FIG. 3 is a side cross-sectional view of the turning tool 1.

As shown in FIGS. 1 to 3, the turning tool unit 200A of the present embodiment includes the turning tool 1 and a holder (tool accessory) 210 attached to the turning tool 1.

### <Turning Tool>

The turning tool 1 of the present embodiment performs a turning operation such as boring on a work material 100 such as a metal material rotated around a main spindle. A posterior end portion of the turning tool 1 is held by the holder 210 to be detachably attached. The turning tool 1 of the present embodiment is made of metal, and includes a tool main body 2, a cutting insert 4, and a head unit 7.

The tool main body 2 extends in an axial direction Dj along a tool axis J. The tool main body 2 includes a cylindrical shank portion 21 around the tool axis J, and the head portion 22 provided on one side Dj1 in the axial direction Dj of the tool main body 2 with respect to the shank portion 21.

The cylindrical shank portion 21 and the head portion 22 may internally include an accommodation hole 27 that enables the shank portion 21 and the head portion 22 to communicate with each other.

The tool main body 2 includes a shank portion 21 disposed on a posterior end side Dj2 (the other side Dj2) and a head portion 22 disposed on a distal end side Dj1 (one side Dj1) in the axial direction Dj parallel to the tool axis J.

In the drawing, a radial direction Dr is one direction orthogonal to the tool axis J (or the axial direction Dj) and facing from the tool axis J toward an outer periphery of the tool main body 2, a first side Dr1 in the radial direction Dr indicates a side on which the cutting insert 4 is disposed with respect to the tool axis J or the tool main body 2, and a second side Dr2 indicates a side on which the head unit 7 is disposed with respect to the tool axis J or the tool main body 2. A width direction Dw indicates a direction orthogonal to the tool axis J (or the axial direction Dj) and orthogonal to the radial direction Dr.

The head portion 22 includes a protruding portion 23 protruding outward in the radial direction Dr of the tool main body 2 intersecting with the axial direction Dj (or orthogonal to the tool axis J from the outer peripheral surface of the shank portion 21) from an outer peripheral surface of the shank portion 21. The protruding portion 23 is provided with a pedestal 23d.

The head portion 22 has a substantially cylindrical shape, and a diameter of the head portion 22 is configured to be larger than a diameter of the shank portion 21. A center axis of the head portion 22 may be provided to be eccentric with respect to the tool axis J which is a center axis of the shank portion 21. For example, the center axis of the head portion 22 can be provided to be eccentric on a first side Dr1 in the radial direction Dr with respect to the tool axis J which is the center axis of the shank portion 21, and the head portion 22 can be provided to protrude to the first side Dr1 in the radial direction Dr. A portion of the head portion 22 which protrudes to the first side Dr1 in the radial direction Dr will be referred to as a protruding portion 23. The pedestal 23d is provided by cutting out a portion of the protruding portion 23 of the head portion 22. For example, a portion of the protruding portion 23 is cut out in an L-shape to provide the pedestal 23d. The pedestal 23d is open on a distal end side Dj1 in the axial direction Dj.

A cartridge 41 is attached to the pedestal 23d. The cartridge 41 holds the cutting insert 4. The pedestal 23d and the cutting insert 4 attached to the cartridge 41 are disposed on the first side Dr1 in the radial direction Dr with respect to the tool axis J in the tool main body 2. The cutting insert 4 may be directly attached to the pedestal 23d.

The cutting insert 4 has a plate shape. The cutting insert 4 has a rhombus shape in a plan view from a thickness direction of the cutting insert 4. Here, the thickness direction is a plate thickness direction of the cutting insert 4. The cutting insert 4 has a pair of main surfaces facing the thickness direction and having a rhombus shape in a plan view, and a side surface connecting the pair of main surfaces to each other. A cutting edge 42 is provided at a ridge between the main surface and the side surface of the cutting insert 4. The cutting insert 4 is disposed such that the cutting edge 42 faces one side Dj1 (distal end side Dj1) in the axial direction Dj of the tool main body 2.

A portion of the cutting edge 42 protrudes from the tool main body 2 to one side Dj1 (distal end side Dj1) in the axial direction Dj. In addition, the cutting edge 42 protrudes outward in the radial direction Dr of the tool main body 2. Therefore, a portion of the cutting edge 42 is located at a most-distal end on the one side Dj1 in the axial direction Dj and at an outermost end in the radial direction Dr of the tool main body 2.

According to the present embodiment, the cutting insert 4 is fixed to the tool main body 2 via the cartridge 41. Therefore, the cutting insert 4 having various shapes can be fixed to the tool main body 2 by replacing the cartridge 41, and versatility of the tool main body 2 is improved.

The head unit 7 is provided in the head portion 22 of the tool main body 2. As shown in FIG. 3, the head unit 7 includes a holder member 70, a base member 77, a sensor device 3, an imaging device 5, and the illumination device 6. The head unit 7 is disposed on the second side Dr2 in the radial direction Dr with respect to the tool axis J in the tool main body 2. That is, the head unit 7 is disposed on a side opposite to the pedestal 23d and the cutting insert 4 attached to the pedestal 23d across the tool axis J in the radial direction Dr of the tool main body 2. The head unit 7 is detachably attached to an fitting portion 25 of the tool main body 2.

The fitting portion 25 of the tool main body 2 is provided on the second side Dr2 in the radial direction Dr of the head portion 22 of the tool main body 2. Specifically, the second side Dr2 of the head portion 22 in the radial direction Dr is cut out in a U-shape (U-shape in which a bottom surface 25b parallel to the tool axis J is a flat surface), and the fitting portion 25 is provided. The fitting portion 25 is open on the distal end side Dj1 in the axial direction Dj.

One surface of the pedestal 23d having an L-shaped surface and the bottom surface 25b of the fitting portion 25 are disposed in parallel across the tool axis J.

As shown in FIG. 2, the fitting portion 25 is provided on one side Dj1 (distal end side Dj1) of the head portion 22 in the axial direction Dj. The fitting portion 25 is provided on a first surface 22a facing the outside (second side Dr2) of the tool main body 2 in the radial direction Dr. The fitting portion 25 is provided to be recessed inward in the radial direction Dr from the first surface 22a. The fitting portion 25 includes the bottom surface 25b, a pair of side wall surfaces 25s, and a main body end surface 25t.

The bottom surface 25b is a flat surface facing the outside (second side Dr2) of the tool main body 2 in the radial direction Dr. The bottom surface 25b is located inward in the radial direction Dr with respect to the first surface 22a.

The pair of side wall surfaces 25s is provided in a pair of wall portions 2w forming a portion of the tool main body 2. The pair of wall portions 2w is erected outward in the radial direction Dr from both sides in the width direction Dw of the fitting portion 25 intersecting with the axial direction Dj and the radial direction Dr on the bottom surface 25b. The pair of side wall surfaces 25s is a flat surface facing inward in the width direction Dw in each of the pair of wall portions 2w.

As shown in FIGS. 2 and 3, the main body end surface 25t is provided at a position separated from a distal end 22s of the head portion 22 on one side Dj1 in the axial direction Dj by a premeasured dimension to the other side Dj2 in the axial direction Dj. The main body end surface 25t is provided on the other side Dj2 (posterior end side Dj2) in the axial direction Dj with respect to the bottom surface 25b. The main body end surface 25t connects end portions on the other side Dj2 (posterior end side Dj2) in the axial direction Dj in the pair of side wall surfaces 25s. The main body end surface 25t is a flat surface facing one side Dj1 in the axial direction Dj.

As shown in FIG. 3, the accommodation hole 27 is provided inside the tool main body 2. The accommodation hole 27 extends in the axial direction Dj inside the tool main body 2. The accommodation hole 27 extends to one side Dj1 in the axial direction Dj with respect to the main body end surface 25t. The accommodation hole 27 is open outward in the radial direction Dr in a portion of the bottom surface 25b on the other side Dj2 in the axial direction Dj between the pair of side wall surfaces 25s. In addition, the accommodation hole 27 is open toward one side Dj1 in the axial direction Dj in a portion on the first side Dr1 in the radial direction Dr of the main body end surface 25t.

The holder member 70 is provided to cover the fitting portion 25 provided in a portion of the tool main body 2. The holder member 70 is detachably attached to the tool main body 2. The holder member 70 includes an outer peripheral wall portion 71 and a tubular wall portion 72 integrally.

The outer peripheral wall portion 71 faces the outside (second side Dr2) in the radial direction Dr of the tool main body 2. The outer peripheral wall portion 71 closes a space between the pair of wall portions 2w, and forms a portion of the outer peripheral surface of the tool main body 2. The outer peripheral wall portion 71 has a rectangular shape when viewed from the second side Dr2 in the radial direction Dr.

The tubular wall portion 72 extends from an outer peripheral edge portion of the outer peripheral wall portion 71 to the first side Dr1 in the radial direction Dr. A distal end surface of the tubular wall portion 72 on the first side Dr1 in the radial direction Dr faces the bottom surface 25b of the fitting portion 25. The tubular wall portion 72 has a rectangular shape when viewed from the first side Dr1 in the radial direction Dr.

The holder member 70 includes a recessed portion 70s inside the tubular wall portion 72. The recessed portion 70s is provided to be surrounded by the outer peripheral wall portion 71 and the tubular wall portion 72. The recessed portion 70s is open to the first side Dr1 in the radial direction Dr. The recessed portion 70s is recessed from the distal end surface of the tubular wall portion 72 to the second side Dr2 in the radial direction Dr.

The base member 77 is provided parallel to the bottom surface 25b along the bottom surface 25b of the fitting portion 25. The base member 77 has a plate shape intersecting with the radial direction Dr. A camera 51 (to be described later) and the illumination device 6 are fixed to the base member 77. The base member 77 comes into contact with the outer peripheral wall portion 71 inside the tubular wall portion 72 of the holder member 70. The base member 77 is attached to the holder member 70 by fastening a screw (not shown) to the outer peripheral wall portion 71.

The sensor device 3 includes a first distance sensor (sensor) 31 and a second distance sensor (sensor) 32. In the present embodiment, the first distance sensor 31 and the second distance sensor 32 measure a distance to a machined surface 100f machined by using the cutting insert 4, as a physical quantity. In the present embodiment, the first distance sensor 31 and the second distance sensor 32 are eddy current sensors.

As shown in FIGS. 2 and 3, the first distance sensor 31 and the second distance sensor 32 are provided so that respective distal ends 31a and 32a face a measurement target. The first distance sensor 31 and the second distance sensor 32 generate a high-frequency magnetic field by causing a high-frequency current to flow therein. In this manner, an eddy current flows on a surface (machined surface 100f) of the measurement target which is a conductor, and impedance changes in the coils inside the first distance sensor 31 and the second distance sensor 32. The first distance sensor 31 and the second distance sensor 32 measure a distance to the measurement target, based on a change in the impedance. The first distance sensor 31 and the second distance sensor 32 output the change in the impedance, as a voltage (unit is V). Output values of the first distance sensor 31 and the second distance sensor 32 are converted into the distance to the measurement target by using a pre-calculated calibration formula. In the eddy current sensor, measurement accuracy is easily stabilized with respect to disturbances in a surrounding environment or the like. Therefore, regardless of selecting any one of wet machining and dry machining, the eddy current sensor is suitable for distance measurement in an environment having many disturbances after a cutting operation, compared to an optical distance sensor or the like.

The distal end 31a of the first distance sensor 31 is disposed to face outward in the radial direction Dr from the outer peripheral surface of the tool main body 2. The first distance sensor 31 measures a distance to a measurement target disposed outside the tool main body 2 in the radial direction Dr. That is, the first distance sensor 31 sets the outside in the radial direction Dr as a measurement direction. The first distance sensor 31 measures a distance to the machined surface 100f facing inward in the radial direction Dr, which is machined by the cutting insert 4.

The distal end 32a of the second distance sensor 32 is disposed to face one side Dj1 in the axial direction Dj from the distal end 22s of the head portion 22 of the tool main body 2. The second distance sensor 32 measures a distance to a measurement target disposed on one side Dj1 in the axial direction Dj of the tool main body 2. That is, the second distance sensor 32 sets one side Dj1 in the axial direction Dj, as a measurement direction. The second distance sensor 32 measures a distance to the machined surface 100f facing the other side Dj2 in the axial direction Dj, which is machined by the cutting insert 4.

The first distance sensor 31 and the second distance sensor 32 are used to measure the machined surface 100f after the turning tool 1 forms the machined surface 100f. Since the first distance sensor 31 and the second distance sensor 32 are provided in the tool main body 2, the machined surface 100f after the cutting operation can be measured without temporarily separating the turning tool 1 from the work material 100. A time required for the measurement of the machined surface 100f in turning operation can be shortened. In addition, the first distance sensor 31 can measure the distance to the machined surface 100f facing inward in the radial direction Dr, which is machined by the cutting insert 4, and can measure the distance to the machined surface 100f facing the other side Dj2 in the axial direction Dj, which is machined by the cutting insert 4, by using the second distance sensor 32. That is, during dimension measurement, dimensions of surfaces facing different directions can be measured without changing the direction of the work material 100, and a time required for a measurement step can be further shortened. The first distance sensor 31 can measure an outer diameter, an inner diameter, roundness, and the like, which are machined by the cutting insert 4. In addition, the second distance sensor 32 can measure an axial position or the like of a step portion and a hole bottom portion which are machined by the cutting insert 4.

The first distance sensor 31 and the second distance sensor 32 are held by the holder member 70. The first distance sensor 31 penetrates the outer peripheral wall portion 71 in the radial direction Dr, and the distal end 31a is exposed toward the second side Dr2 in the radial direction Dr in the outer peripheral wall portion 71. The second distance sensor 32 penetrates the tubular wall portion 72 in the axial direction Dj, and the distal end 32a is exposed toward one side Dj1 in the axial direction Dj.

As shown in FIG. 3, a cable 31c of the first distance sensor 31 and a cable 32c of the second distance sensor 32 extend to the other side Dj2 in the axial direction Dj through a space between the base member 77 and the bottom surface 25b of the fitting portion 25. The cables 31c and 32c are guided into the accommodation hole 27 that is open outward in the radial direction Dr on the other side Dj2 in the axial direction Dj with respect to the bottom surface 25b.

An internal circuit board 120 is accommodated in the accommodation hole 27. The internal circuit board 120 includes a flexible circuit board 121 accommodated inside the accommodation hole 27 and an AD converter 125 mounted on the flexible circuit board 121.

The cables 31c and 32c are connected to the flexible circuit board 121 accommodated inside the accommodation hole 27. The cables 31c and 32c transmit an analog electrical signal measured by the first distance sensor 31 and the second distance sensor 32 to the AD converter 125 via the flexible circuit board 121. The AD converter 125 converts the analog electrical signal measured by the first distance sensor 31 and the second distance sensor 32 into a digital electrical signal. A connection wire 250 is connected to an end portion of the flexible circuit board 121 on the other side Dj2 in the axial direction Dj. The AD converter 125 outputs the converted digital electrical signal to a control unit 220 (to be described later) through the flexible circuit board 121 and the connection wire 250.

**In** addition, the flexible circuit board 121 is provided with a camera interface (not shown) or the like that exchanges signals with the camera 51.

The imaging device 5 is provided in the head unit 7 of the tool main body 2. The imaging device 5 is disposed on the other side Dj2 in the axial direction Dj with respect to the sensor device 3. The imaging device 5 includes a camera 51 and a lens cover 53.

For example, the camera 51 is a waterproof CMOS image sensor or a CCD image sensor. The camera 51 is fixed to the base member 77. The camera 51 has a lens unit that faces an imaging target. The lens unit includes a lens (not shown) incorporated in the camera 51. The camera 51 is disposed such that the lens unit faces outward in the radial direction Dr.

A camera opening 76 is provided in the outer peripheral wall portion 71 of the holder member 70. The camera opening 76 penetrates the outer peripheral wall portion 71 in the radial direction Dr. The camera opening 76 is provided at a position facing the lens unit of the camera 51 in the radial direction Dr. In this manner, the camera 51 is disposed to image outward from the tool main body 2 in the radial direction Dr through the camera opening 76. The camera 51 images the machined surface 100f of the work material 100 on which the cutting operation is performed by the cutting insert 4, which faces inward in the radial direction Dr, that is, a so-called inner diameter surface.

The camera 51 is disposed on the other side Dj2 in the axial direction Dj with respect to the cutting insert 4 attached to the pedestal 23d. However, it is preferable that the camera 51 is disposed at a position as close as possible to a machining position of the machined surface 100f machined by the cutting insert 4 in the axial direction Dj. In this manner, a state of the machined surface 100f after machining can be imaged from a closer position. In addition, for example, when the sensor device 3 is disposed at a position different from the above-described position, the camera 51 may be disposed at the same position as the cutting insert 4 in the axial direction Dj. In this manner, the machined surface 100f during or after the cutting operation with the cutting insert 4 is imaged from the closer position.

The lens cover 53 covers the lens unit of the camera 51. The lens cover 53 has a plate shape along a surface intersecting with the radial direction Dr. The lens cover 53 is formed of a resin material, a glass material, or the like that transmits light.

The camera 51 includes a cable 52. One end of the cable 52 is connected to the camera 51. The cable 52 is guided to the first side Dr1 in the radial direction Dr with respect to the base member 77 through a cable insertion hole 77h provided in the base member 77. The cable 52 passes a space between the base member 77 and the bottom surface 25b of the fitting portion 25, and is guided into the accommodation hole 27. The cable 52 extends to the other side Dj2 in the axial direction Dj inside the shank portion 21 through the accommodation hole 27, and is connected to the flexible circuit board 121.

The illumination device 6 is provided in the head unit 7 of the tool main body 2. The illumination device 6 is disposed on the other side Dj2 in the axial direction Dj with respect to the camera 51 of the imaging device 5. The illumination device 6 illuminates the machined surface 100f to be imaged by the camera 51. In this manner, the camera 51 of the imaging device 5 is disposed between the first distance sensor 31 and the second distance sensor 32 of the sensor device 3 and the illumination device 6 in the axial direction Dj. The illumination device 6 includes a light source 61.

For example, the light source 61 is a light emitting element such as an LED. The light source 61 is fixed to the base member 77. As shown in FIG. 2, an inclined portion 71k is provided in the outer peripheral wall portion 71 of the holder member 70. The inclined portion 71k is provided on the other side Dj2 in the axial direction Dj with respect to the camera opening 76. The inclined portion 71k extends from the outer peripheral portion of the camera opening 76 toward the other side Dj2 in the axial direction Dj on the first side Dr1 in the radial direction Dr. In this manner, a stepped surface 71d facing one side Dj1 in the axial direction Dj is provided between the outer peripheral surface of the outer peripheral wall portion 71 and the distal end of the inclined portion 71k. A light source opening 79 through which a portion of the light source 61 is exposed is provided on the stepped surface 71d.

Illumination light from the light source 61 is emitted to one side Dj1 in the axial direction Dj through the light source opening 79. The illumination light from the light source 61 is reflected from a surface of the inclined portion 71k, and is emitted to the machined surface 100f on the outside in the radial direction Dr.

### <Holder>

As shown in FIG. 1, the shank portion 21 of the turning tool 1 is held by a holder main body 211 of the holder 210. The holder 210 includes the holder main body (accessory main body) 211 and the control unit 220.

The holder main body 211 has a cylindrical shape extending in the axial direction Dj, and an accommodation hole 211h is provided inside the holder main body 211. The shank portion 21 is inserted into the accommodation hole 211h. The shank portion 21 is fixed to the holder main body 211 by a plurality of fixing screws 212.

The control unit 220 includes a box-shaped casing 221, a control board 222, and a battery 224 that supplies power to the control board 222, the first distance sensor 31, the second distance sensor 32, the camera 51, and the light source 61.

The casing 221 is integrally fixed to the holder main body 211. In the present embodiment, the casing 221 is provided on the second side Dr2 in the radial direction Dr with respect to the holder main body 211. The casing 221 includes a casing body 221a fixed to the holder main body 211 and a lid body 221b. The casing body 221a is open toward the second side Dr2 in the radial direction Dr. The lid body 221b closes an opening of the casing body 221a.

As shown in FIG. 3, the control board 222 and the battery 224 are accommodated inside the casing 221. Since the casing 221 performs wireless communication by using a wireless communication module 227 (to be described below), it is preferable that the casing 221 is formed of a resin or the like.

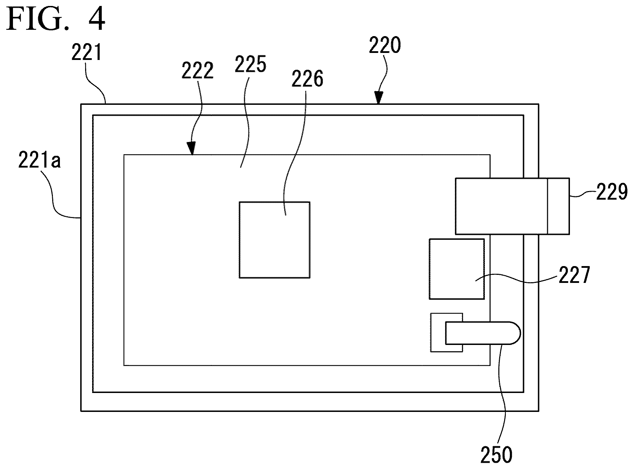

FIG. 4 is a plan view showing the control board 222.

As shown in FIGS. 3 and 4, the control board 222 is a so-called single board computer. The control board 222 mainly includes a substrate body 225, a control module 226, and a wireless communication module 227 (refer to FIG. 4). A power switch 229 (refer to FIG. 4) is connected to the control board 222. In addition, the control board 222 supplies the power supplied from the battery 224 to the first distance sensor 31, the second distance sensor 32, the camera 51, and the light source 61 via the connection wire 250.

The circuit board body 225 is a print circuit board on which a premeasured wiring pattern is provided on a surface. As shown in FIG. 3, the circuit board body 225 is connected to the internal circuit board 120 via the connection wire 250. The connection wire 250 is provided to penetrate a bottom portion of the casing body 221a and the holder main body 211 in the radial direction Dr. The control module 226 and the wireless communication module 227 are mounted on the circuit board body 225. In addition, the power switch 229 is connected to the circuit board body 225 via a cable or the like.

The control module 226 includes a central processing unit (CPU), a memory, and the like. The control module 226 including the CPU is a heat generating element that generates heat during the operation.

A control program for controlling the operations of the first distance sensor 31, the second distance sensor 32, the camera 51, and the light source 61 is stored in advance in a memory (not shown) of the control module 226. The control module 226 outputs control signals for controlling the operations of the first distance sensor 31, the second distance sensor 32, the camera 51, and the light source 61 to the first distance sensor 31, the second distance sensor 32, the camera 51, and the light source 61 via the connection wire 250 and a circuit on the internal circuit board 120. The control module 226 outputs measurement signals indicating measurement results (distances) in the first distance sensor 31 and the second distance sensor 32 to the outside via the wireless communication module 227, based on the digital signal output from the first distance sensor 31 and the second distance sensor 32 via the AD converter 125. The control module 226 outputs image data captured by the camera 51 and received via the connection wire 250 to the outside via the wireless communication module 227.

The wireless communication module 227 can perform wireless communication with the outside. For example, the wireless communication module 227 can wirelessly communicate with an external control device provided on the machine tool side via a wireless communication network such as a wireless LAN, Wi-Fi (registered trademark), or BLUETOOTH (registered trademark). The wireless communication module 227 receives control signals for controlling the operations of the first distance sensor 31, the second distance sensor 32, the camera 51, and the light source 61 from the outside, and transmits measurement signals in the first distance sensor 31 and the second distance sensor 32, image data captured by the camera 51, or the like.

The power switch 229 intermittently supplies the power from the battery 224 to the control board 222. A portion of the power switch 229 is provided to be exposed to the outside of the casing 221 from a side surface of the casing body 221a, and is operable from the outside of the casing 221.

### [Operational Effects of Present Embodiment]

According to the turning tool 1 of the present embodiment described above, the control board 222 is provided in the holder main body 211 of the holder 210 attached to the turning tool 1. In this manner, even when the control board 222 generates heat, heat transmission to the turning tool 1 can be suppressed. Therefore, it is possible to suppress a possibility that measurement sensitivity of the first distance sensor 31 and the second distance sensor 32 is affected, and a possibility that the tool main body 2 of the cutting insert 4 thermally expands. As a result, it is possible to suppress the thermal influence from the control board 222, and it is possible to ensure the measurement sensitivity of the first distance sensor 31 and the second distance sensor 32 and the machining accuracy. In addition, the AD converter 125 is provided in the turning tool 1, and the AD converter 125 and the control board 222 are connected to each other via the connection wire 250. In this manner, the digital electrical signal converted by the AD converter 125 is transmitted to the control board 222 via the connection wire 250. The analog signal easily affected by noise from the outside is transmitted only in a short path from the first distance sensor 31 and the second distance sensor 32 to the AD converter 125 provided in the turning tool 1. Therefore, the influence of noise can be suppressed, and the physical quantity can be measured with high sensitivity by the first distance sensor 31 and the second distance sensor 32.

In addition, in the present embodiment, the control board 222 includes the control module 226 configured to control the operations of the first distance sensor 31 and the second distance sensor 32. In this manner, the operations of the first distance sensor 31, the second distance sensor 32, the camera 51, and the light source 61 can be controlled by the turning tool unit 200A itself. Therefore, there is no need to provide a program or the like for controlling the operations of the first distance sensor 31, the second distance sensor 32, the camera 51, and the light source 61 on the machine tool side. As a result, it is not necessary to perform setting or the like of a program corresponding to the turning tool 1 to be used on the machine tool side in advance before performing machining using the turning tool 1, reducing setup effort and time.

In addition, in the present embodiment, the wireless communication module 227 is provided in the holder main body 211 of the holder 210 attached to the turning tool 1. In this manner, it is possible to suppress a possibility that the wireless communication is adversely affected by metal forming the turning tool 1.

In addition, in the present embodiment, the battery 224 is provided in the holder 210. Therefore, the power can be supplied to the control board 222, the first distance sensor 31, the second distance sensor 32, the camera 51, and the light source 61 without receiving power supply from the outside. Therefore, a wiring line for receiving the power supply from the outside is not required.

In addition, in the present embodiment, the control board 222 includes the heat generating element. In this case, it is possible to suppress a possibility that the heat emitted from the control board 222 including the heat generating element is transmitted to the turning tool 1.

In addition, in the present embodiment, the AD converter 125 is accommodated in the accommodation hole 27 inside the metal-made turning tool 1, the influence of noise on the analog signals output from the first distance sensor 31 and the second distance sensor 32 can be more effectively suppressed.

In addition, in the present embodiment, the control board 222 is provided in the holder 210 that holds the turning tool 1. Therefore, it is possible to suppress the thermal influence from the control board 222, and it is possible to ensure measurement sensitivity of the first distance sensor 31 and the second distance sensor 32 and machining accuracy.

### (Modification Example of Embodiment)

In the above-described embodiment, the holder 210 has been described as an example of the tool accessory attached to the turning tool 1, but the present invention is not limited thereto.

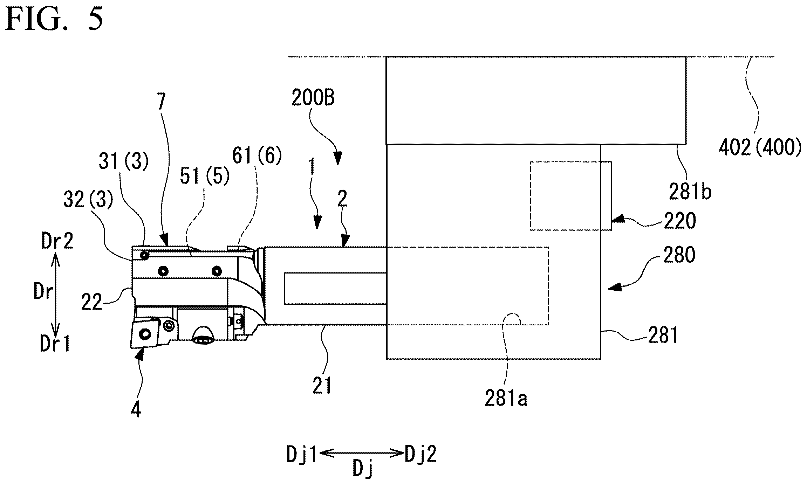

For example, as shown in FIG. 5, a turning tool unit (cutting tool unit) 200B includes the turning tool 1 and the holder (tool accessory) 280 attached to the turning tool 1. The holder 280 is mounted on the machine tool 400. In the present modification example, the machine tool 400 includes a cylindrical turret 402. The turret 402 is rotatable around a center axis thereof. A plurality of the holders 280 are mounted on an outer peripheral portion of the turret 402 at an interval in a circumferential direction. The machine tool 400 rotates the turret 402 to appropriately select one of the turning tools 1 held by the plurality of holders 280 and to move the selected one of the turning tools 1 to a position facing the work material 100. In this manner, the machine tool 400 performs the cutting operation on the work material 100.

The holder 280 includes a holder main body (accessory main body) 281 and the control unit 220.

The holder main body 281 integrally includes a tool holding portion 281a and a base portion 281b. The tool holding portion 281a is a hole extending in the axial direction Dj, and the shank portion 21 is inserted into the hole. The base portion 281b is fastened and fixed to the turret 402 by a bolt (not shown).

In addition, in the turning tool units 200A and 200B of the above-described embodiment and modification example, the control board 222 is provided in the holders 210 and 280 used when the turning tool 1 is attached to the machine tool. However, the present invention is not limited thereto.

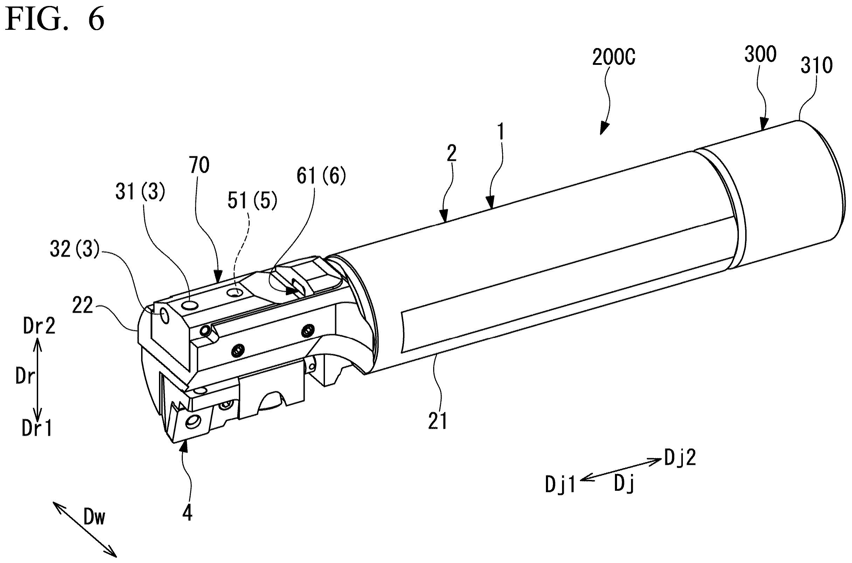

For example, as shown in FIG. 6, a turning tool unit (cutting tool unit) 200C includes the turning tool 1 and a tool accessory 300 attached to the turning tool 1. The tool accessory 300 includes a case (accessory main body) 310. The case 310 is connected to an end portion on the other side Dj2 in the axial direction Dj in the tool main body 2. The control board 222, the battery 224, and the like as described in the above-described embodiment are accommodated inside the case 310. The control board 222 inside the case 310 is connected to the internal circuit board 120 (AD converter 125) inside the accommodation hole 27 via the connection wire 250.

### [Other Configurations Included in Present Invention]

The present invention is not limited to the above-described embodiment. The configurations (components) described in the above-described embodiment, modification examples, supplements, and the like may be combined, and additions, omissions, substitutions, and other changes in the configurations can be made within the scope not departing from the concept of the present invention. In addition, the present invention is not limited by the above-described embodiments, and is limited only by the scope of the appended claims.

For example, in the above-described embodiment, a case of adopting the turning tool that performs cutting by rotating the work material has been described as an example of the cutting tool included in the cutting tool unit. However, the turning tool is not limited to the turning tool of the present embodiment as long as the turning tool presses the cutting insert against the work material to perform the cutting operation. The cutting tool, for example, may be a rotary tool that rotates by itself, such as a drill, an end mill, or a milling machine.

### REFERENCE SIGNS LIST

1 Turning tool (cutting tool)
2 Tool main body
4 Cutting insert
23d Pedestal
27 Accommodation hole
31 First distance sensor (sensor)
32 Second distance sensor (sensor)
125 AD converter
100 Work material
200A to 200C Turning tool unit (cutting tool unit)
210 Holder (tool accessory )
211 Holder main body (accessory main body)
222 Control board
224 Battery
226 Control module
227 Wireless communication module
250 Connection wire
280 Holder (tool accessory)
281 Holder main body (accessory main body)
300 Tool accessory
310 Case (accessory main body)
400 Machine tool
Dj Axial direction
Dj 1 One side
Dj2 Other side
Dr Radial direction
Dw Width direction
J Tool axis

## Claims

1. A cutting tool unit comprising:
a cutting tool; and
a tool accessory attached to the cutting tool,
wherein the cutting tool includes
a tool main body extending along a tool axis and having a pedestal at a front portion on one side in an axial direction along the tool axis,
a cutting insert detachably attached to the pedestal,
a sensor provided in the tool main body and configured to measure a physical quantity, and
an AD converter configured to convert an analog electrical signal measured by the sensor into a digital electrical signal, and
the tool accessory includes
an accessory main body, and
a control board provided in the accessory main body and connected to the AD converter via a connection wire.

2. The cutting tool unit according to Claim 1,
wherein the control board further includes a control module configured to output a control signal for controlling an operation of the sensor to the sensor via the connection wire.

3. The cutting tool unit according to Claim 1 or 2,
wherein the control board further includes a wireless communication module configured to transmit a measurement signal of the sensor to an outside, based on the digital electrical signal input from the AD converter via the connection wire.

4. The cutting tool unit according to Claim 1 or 2,
wherein the tool accessory further includes a battery configured to supply power to the control board and the sensor.

5. The cutting tool unit according to Claim 1 or 2,
wherein the control board includes a heat generating element.

6. The cutting tool unit according to Claim 1 or 2,
wherein the AD converter is accommodated in an accommodation hole provided inside the cutting tool made of metal.

7. The cutting tool unit according to Claim 1 or 2,
wherein the tool accessory is a holder holding the cutting tool and mounted on a machine tool.
